# FASCICULE DE BREVET EUROPEEN

(11) **EP 2 208 249 B1**
(45) Date de publication et mention de la délivrance du brevet: **01.04.2015**
(21) Numéro de dépôt: 08842695.2
(22) Date de dépôt: 22.10.2008
(51) Int. Cl.: H01M 8/02, H01M 8/24

(54) **ARCHITECTURE DE PILE A COMBUSTIBLE INTEGRE SANS JOINT.**
AUFBAU EINER INTEGRIERTEN BRENNSTOFFZELLE OHNE DICHTUNG
JOINT-FREE INTEGRATED FUEL CELL ARCHITECTURE.

(30) Priorité: 24.10.2007 FR 0758551
(43) Date de publication de la demande: 21.07.2010
(73) Titulaire: Commissariat à l'Énergie Atomique et aux Énergies Alternatives, 75015 Paris (FR)
(72) Inventeur: TIQUET, Pascal, F-38100 Grenoble (FR)
(74) Mandataire: Ilgart, Jean-Christophe
(86) Numéro de dépôt international: PCT/EP2008/064304
(87) Numéro de publication internationale: WO 2009/053398

(56) Documents cités:
- EP-A- 1 482 583
- FR-A- 1 593 242

## Description

### DOMAINE TECHNIQUE ET ART ANTÉRIEUR

L'invention concerne le domaine des piles à combustible. Elle concerne notamment une nouvelle structure d'élément pour réaliser une telle pile, ainsi qu'une pile obtenue par empilement et assemblage de ces éléments.

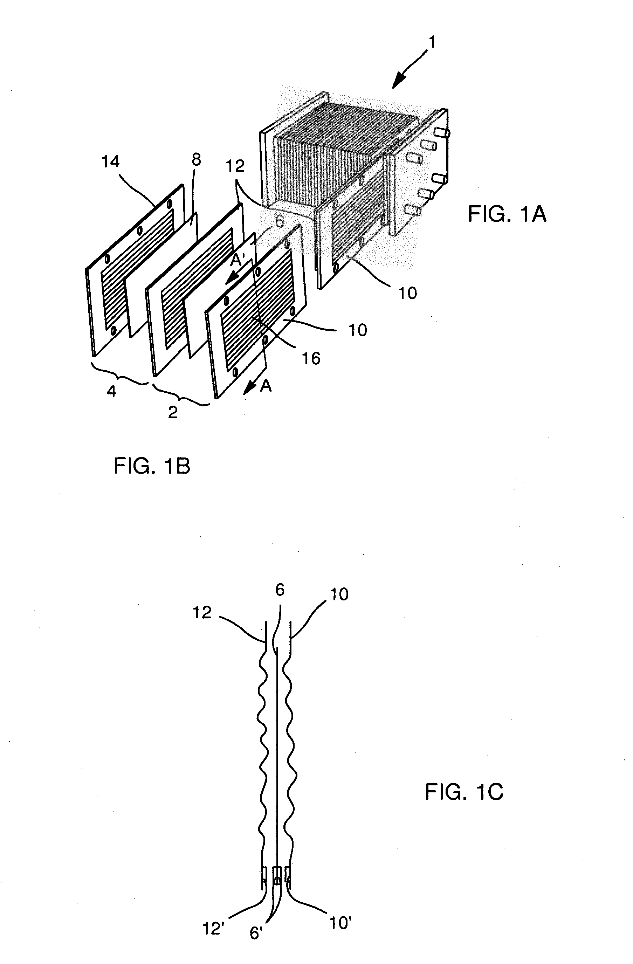

Comme illustré sur les figures 1A et 1B, une pile à combustible 1 de structure connue comporte plusieurs modules 2, 4,... comportant chacun un assemblage membrane-électrode (ou AME) 6, 8.... Chaque AME est flanquée de deux plaques dites plaques bipolaires, séparées l'une de l'autre par un joint. Trois plaques 10, 12, 14 sont représentés sur la figure 1B, la plaque 12 étant commune aux couples de plaques 10, 12 et 12, 14.

Les plaques bipolaires 10, 12, 14 sont réalisées par exemple en inox embouti ou bien en graphite usiné et ajoutent donc du poids à un dispositif pour lequel l'un des critères de performance est, justement, la puissance produite par unité de poids. Mais ces plaques assurent, outre la distribution des gaz, la connexion électrique de deux cellules successives, et la circulation d'un fluide caloporteur pour gérer l'énergie exothermique des réactions électrochimiques. La distribution des gaz est plus précisément obtenue par des canaux, désignés par la référence 16 pour la plaque 10 de la figure 1B, qui sont donc situés devant la surface active de chaque AME.

Les joints assurent également, avec plus ou moins de succès, l'étanchéité à l'hydrogène de chaque cellule et sont disposés de part et d'autre de chaque plaque bipolaire et de chaque AME.

On obtient un taux minimal de fuite d'hydrogène et une résistance électrique interne minimale en procédant à un serrage de l'ensemble des plaques bipolaires, des AME et des joints.

La figure 1C représente, en vue en coupe, selon un plan passant le long de l'axe AA' de la figure 1B, la disposition relative d'une AME 6 et des deux plaques bipolaires 10, 12. Lors de l'opération de serrage mentionné ci-dessus, les plaques 10,12 vont venir quasiment au contact de l'AME 6, et parfois même déformer cette dernière : il ne reste donc qu'un très faible espace entre ces plaques et cette membrane pour la circulation des gaz nécessaires à la réaction, à savoir l'hydrogène d'un côté et l'oxygène ou l'air de l'autre. En outre, en fonctionnement, c'est-à-dire lorsque les réactions se produisent, de l'eau est dégagée du côté oxygène ou air. Cette eau tend à faire gonfler et à noyer l'AME 6. Cette dernière étant déjà située presque en contact des plaques 10, 12, la circulation des gaz devient fortement perturbée, et le rendement de la cellule chute considérablement. Le phénomène peut en outre se propager de cellule en cellule et perturber l'arrivée des réactifs gazeux.

Par conséquent, outre le problème posé par leur poids, les plaques prennent trop de place dans la pile. Et, par leur positionnement, elles réduisent la surface active d'un facteur deux et compriment le coeur de pile de façon hétérogène.

Sur la figure 1C sont également représentés les joints 6', 10', 12' situés d'une part sur l'AME 6, d'autre part sur les plaques 10, 12. Ces joints sont destinés à venir en contact l'un avec l'autre et ils vont donc, comme expliqué ci-dessus, être écrasés l'un contre l'autre lors du serrage de l'ensemble des cellules 2, 4... pour constituer la pile 1.

Pour chaque AME, l'étanchéité entre le compartiment hydrogène et le compartiment oxygène ou air est donc assurée par les joints, ce qui implique l'utilisation d'un grand nombre de joints. Là encore, le serrage déjà mentionné vise à assurer cette étanchéité, mais il ne doit pas être trop important pour éviter d'endommager les AME 6, 8, et notamment leurs couches actives. Ce compromis sur le serrage devient de plus en plus difficile à réaliser lorsque qu'il s'agit d'assembler plusieurs centaines d'AME. En outre, la tenue, dans le temps, de cet assemblage, n'est pas bonne, car toute la pression de serrage est exercée par l'intermédiaire des joints d'étanchéité 6', 10', 12'. Au cours du temps, les joints, soumis aux températures de fonctionnement de la pile, vont fluer, et la pression de serrage baisse peu à peu, ce qui entraîne la baisse des pressions de contact entre les plaques bipolaires et les AME, réduisant d'autant les performances de la pile. L'utilisation de joints dans la conception de la pile introduit donc un aléa important sur la fiabilité et la performance de la pile à combustible.

Un autre problème est la relative faible densité de puissance d'un tel système.

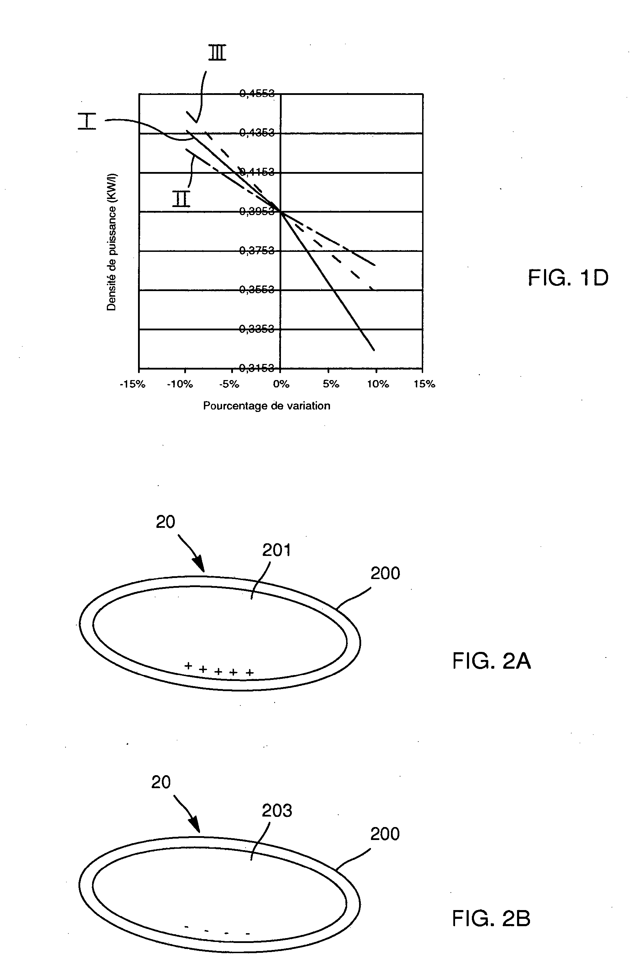

La figure 1D montre que la densité de puissance est essentiellement fonction, au premier ordre, du rendement de la pile (courbe I), de la densité du matériau des plaques bipolaires (courbe II), et de l'épaisseur de ces plaques (courbe III). D'autres paramètres, tels que le nombre de cellules, la densité des matériaux constituant les goujons de serrage, l'épaisseur des plaques de serrage, la surface active de chaque cellule, ont également une influence, mais beaucoup moins importante que celle des trois paramètres évoqués ci-dessus.

De nombreux dispositifs connus sont réalisés, comme expliqué ci-dessus, avec des plaques bipolaires et des AME. Un tel système est décrit par exemple dans le document US 2004/0101736.

Le document US 7 226 684 décrit un autre procédé pour sceller des éléments d'un empilement et rendre ce dernier plus étanche à l'hydrogène, sans remettre en question l'utilisation de plaques bipolaires. Les problèmes évoqués ci-dessus en liaison avec l'utilisation de ces dernières restent donc les mêmes. L'ensemble de l'empilement est serti, et non pas boulonné, mais la pression nécessaire pour maintenir les éléments en position et maintenir l'étanchéité reste la même que dans le cas d'une technique d'assemblage telle que décrite dans US 2004/0101736 (cité ci-dessus). En outre, l'utilisation d'une bande de scellement latérale (référence 20 sur les figures de ce document) nécessite une épaisseur précise de cette bande (sensiblement égale à l'épaisseur de l'AME). Les incertitudes de positionnement de cette bande, lors des déformations, conduisent inévitablement aux mêmes problèmes, ou à des problèmes équivalents, que ceux évoqués ci-dessus.

Par conséquent, tant les plaques bipolaires que les joints posent problème dans les architectures connues.

Il est donc nécessaire de trouver une nouvelle architecture d'éléments de pile ne représentant pas les problèmes mentionnés ci-dessus.

### EXPOSÉ DE L'INVENTION

L'invention concerne d'abord un élément de pile à combustible, comportant un assemblage (AME) d'une membrane, d'une première et d'une deuxième électrodes, et des moyens de maintien de cet assemblage, qui forment support en périphérie de celui-ci et qui comportent des moyens de connexion électrique et des moyens de circulation de fluide et d'amenée de ce fluide vers ledit assemblage.

Selon l'invention, une cellule ou un élément de pile comporte une AME et un support d'AME, formé, par exemple moulé, à sa périphérie. Tous les moyens de connexion électrique, de circulation de fluide et d'amenée de ce fluide vers l'AME sont contenus ou intégrés dans ce support.

Toute la périphérie de l'AME est donc noyée dans la matière formant le support.

Chaque cellule ou élément comporte donc des zones conductrices, réalisées dans la matière formant support de l'AME, par exemple par surmoulage à l'extérieur de la zone active de l'AME. Des zones conductrices surmoulées sont compatibles avec une très bonne continuité et une étanchéité maximale.

Les moyens de maintien de l'assemblage peuvent être en un polymère thermoplastique, par exemple en polyéthylène, ou en polypropylène, ou en polystyrène, ou en COC (cyclo-oléfine-cyclo aliphatique), ou en PTFE (ou téflon), ou en PET, ou en PEEK (polyéther-poly-acétone).

Un polymère thermoplastique peut comporter en outre des nanotubes de carbone ou du noir de carbone ou des nanofils de silicium, et/ou de carbone et/ou de cuivre et/ou d'aluminium, ce qui permet d'améliorer l'évacuation de la chaleur par le matériau de moulage lors du fonctionnement de l'élément dans une pile à combustibles.

Les moyens de connexion électrique peuvent comporter au moins un insert conducteur relié à au moins une des électrodes de la membrane. Ce sont par exemple des moyens métalliques, ou en un polymère conducteur, par exemple un polymère à nanotubes de carbone ou à nanofils.

Quant aux électrodes de chaque membrane, elles peuvent être en fibre de carbone ou en un tissage de fibres de carbone avec des fils d'or, ou de cuivre, ou d'aluminium.

De préférence, les moyens de circulation et d'amenée de fluide comportent des canaux latéraux qui traversent le support, et des canaux de distribution de fluide, depuis les canaux latéraux vers l'assemblage membrane-électrodes. Les canaux de distribution de fluide peuvent comporter des îlots qui guident le fluide vers l'assemblage membrane-électrodes.

Les moyens de maintien de l'AME, formant support, permettent d'appliquer une tension mécanique telle que la membrane ne puisse pas se déformer, selon une direction perpendiculaire à la membrane, au-delà d'une certaine limite, notamment au-delà d'un plan qui s'appuie sur la surface extérieure du support et qui est sensiblement parallèle à la membrane. Ainsi, deux membranes d'éléments voisins ne peuvent venir en contact l'une avec l'autre.

Les électrodes sont de préférence en une matière poreuse, les moyens de maintien de l'assemblage étant en un matériau qui pénètre dans cette matière poreuse.

Selon un mode de réalisation, les moyens de connexion électrique comportant au moins deux éléments conducteurs qui traversent le support, et dont au moins l'un des deux est relié, par un conducteur secondaire, à l'une des premières et deuxième électrodes.

Selon un autre mode de réalisation, les moyens de connexion électrique comportent au moins deux éléments conducteurs qui ne traversent le support qu'en partie et depuis des faces différentes du support, et dont chacun d'entre eux est relié, par un conducteur secondaire, soit à l'une, soit à l'autre des première et deuxième électrodes.

Une pile à combustible selon l'invention comporte un empilement d'éléments selon l'invention, les moyens périphériques de maintien des AME étant deux à deux assemblés de manière étanche, les moyens de connexion électrique des AME voisines étant connectés entre eux et les moyens de circulation de fluide formant au moins un circuit d'écoulement de fluide à travers ledit empilement.

On peut ainsi supprimer les plaques bipolaires et les joints des techniques connues, tout en gardant les fonctions de connexion électriques et de distribution des gaz combustibles. On évite ainsi les problèmes déjà expliqués ci-dessus et découlant de la présence de plaques bipolaires et de joints.

Les différents éléments de l'empilement peuvent être soudés deux à deux, par exemple par soudure sans apport de matière, par une technique telle que celle du miroir chauffant.

Les moyens de connexion électrique sont assemblés de manière à former un circuit à montage en série, ou à montage en parallèle, ou à montage partiellement en série et partiellement en parallèle. Par conséquent, suivant la disposition des prises de contact électriques sur les électrodes et dans les supports d'AME, les cellules peuvent être reliées en parallèle ou en série ou selon un mélange de ces deux configurations.

L'empilement d'éléments peut être compris entre une face d'entrée et une face de sortie, la face d'entrée comportant des moyens d'introduction de gaz, et l'une des deux faces d'entrée et de sortie comportant des moyens de connexion électrique. Les moyens d'introduction de gaz comportent au moins deux régulateurs de débit.

En outre, des moyens forment un circuit électrique de retour, entre la face qui comporte les moyens de connexion électrique et l'élément de l'empilement qui est le plus éloigné de cette face.

L'invention concerne également un procédé de réalisation d'un élément de pile à combustible, comportant :
a) une étape de moulage de la périphérie d'un assemblage d'une membrane, d'une première et d'une deuxième électrode, pour former des moyens de maintien dudit assemblage,
b) une étape de réalisation, dans lesdits moyens de maintien :
   b1) de moyens de connexion électrique,
   b2) de moyens de circulation de fluide et d'amenée de ce fluide vers ledit assemblage membrane-électrodes.

Les moyens de connexion électrique peuvent être réalisés par moulage d'un insert métallique, ou par injection d'un polymère conducteur dans lesdits moyens de maintien de la membrane.

Selon une variante, les moyens de connexion électrique sont réalisés par formation d'au moins une ouverture dans lesdits moyens de maintien de la membrane, et insertion dans cette ouverture d'un connecteur.

L'invention concerne également un procédé de réalisation d'une cellule de pile à combustible, sans joint et sans plaques bipolaires. Un tel procédé comporte un assemblage, par soudure ou collage, d'une pluralité d'éléments selon l'invention.

Une étape préalable d'alignement des éléments à assembler peut être mise en oeuvre, par exemple par contrôle d'au moins une propriété électrique de l'ensemble des éléments.

L'invention concerne également une mâchoire de presse comportant des moyens pour mesurer des propriétés électriques d'un objet en contact avec ladite mâchoire, ainsi qu'une presse comportant deux telles mâchoires.

### BRÈVE DESCRIPTION DES DESSINS

- Les figures 1A-1C représentent une structure de piles à combustible selon l'art antérieur,
- la figure 1D représente les résultats d'une étude de sensibilité sur la densité de puissance d'une pile à plaques bipolaires,
- les figures 2A et 2B représentent la structure d'une AME pouvant être mise en oeuvre dans le cadre de la présente invention,
- la figure 3 est une vue en coupe d'une AME représentée sur les figures 2A et 2B,
- les figures 4A à 4D représentent des éléments selon l'invention, destinés à être assemblées pour former une pile à combustible,
- la figure 5A représente un plan simplifié de l'architecture des éléments des figures 4A à 4D, après assemblage,
- la figure 5B représente un schéma électrique équivalent de l'assemblage des éléments des figures 4A-4D,
- les figures 6A à 6D représentent d'autres éléments selon l'invention, destinés à être assemblés pour former une pile à combustible,
- la figure 7A représente un plan simplifié de l'architecture des éléments des figures 6A à 6D, après assemblage,
- la figure 7B représente un schéma électrique équivalent de l'assemblage des éléments des figures 6A-6D,
- la figure 8 représente un élément de piles à combustible, selon l'invention,
- la figure 9 représente une vue éclatée d'une pile à combustible selon l'invention,
- les figures 10A-10D sont des exemples de connecteurs électriques pouvant être utilisés dans des éléments de pile selon l'invention,
- les figures 11A et 11B représentent une pile à combustible selon l'invention, après assemblage de ses éléments individuels,
- les figures 12A-12E représentent des étapes d'un procédé d'assemblage d'éléments individuels selon l'invention,
- la figure 13 représente des mâchoires d'une presse pouvant être utilisée dans le cadre d'un procédé d'assemblage d'éléments selon l'invention,
- la figure 14 est une vue en coupe de l'assemblage d'une AME avec son support, selon l'invention.

### EXPOSÉ DÉTAILLÉ DE MODES DE RÉALISATION PARTICULIERS

Un assemblage membrane-électrode (AME) 20, pouvant être mis en oeuvre dans un élément selon l'invention, comporte, comme illustré sur les figures 2A et 2B, une partie centrale 200, la membrane, essentiellement constituée d'un matériau de type perfluoropolymère ou polyimide ou polyéther, tel que le matériau commercialisé par du Pont de Nemours sous la marque Naphion©. Cette membrane est comprise entre deux couches d'électrodes 201, 203 (identifiées par leur polarité « + » et « - » sur les deux figures 2A et 2B, mais elles sont évidemment neutres lorsque le dispositif n'est pas sous tension).

Ces électrodes 201, 203 sont par exemple réalisées à base d'un mélange de graphite et de platine, mélange qui peut être sous la forme d'une poudre pulvérisée rendue partiellement hydrophobe par un fluoropolymère (type Téflon). Sur chacune de ces électrodes peut-être formé un dépôt ou revêtement 201', 203' d'un matériau poreux, par exemple constitué de fibres de carbone.

On peut aussi utiliser, pour ce dépôt ou revêtement 201', 203', un tissage de fibres de carbone avec des fils d'or, ou de cuivre, ou d'aluminium. Ce type de matériau est plus coûteux mais permet, tout en laissant les gaz traverser le matériau poreux ainsi constitué, d'augmenter sa puissance. Cela permet également de travailler avec des surfaces de membrane plus importantes, sensiblement de l'ordre de 20 cm*30 cm.

La forme circulaire ou elliptique des figures 2A et 2B est simplement donnée à titre d'exemple, et l'invention peut être appliquée à des AME de toute forme (carrée, rectangulaire, ...).

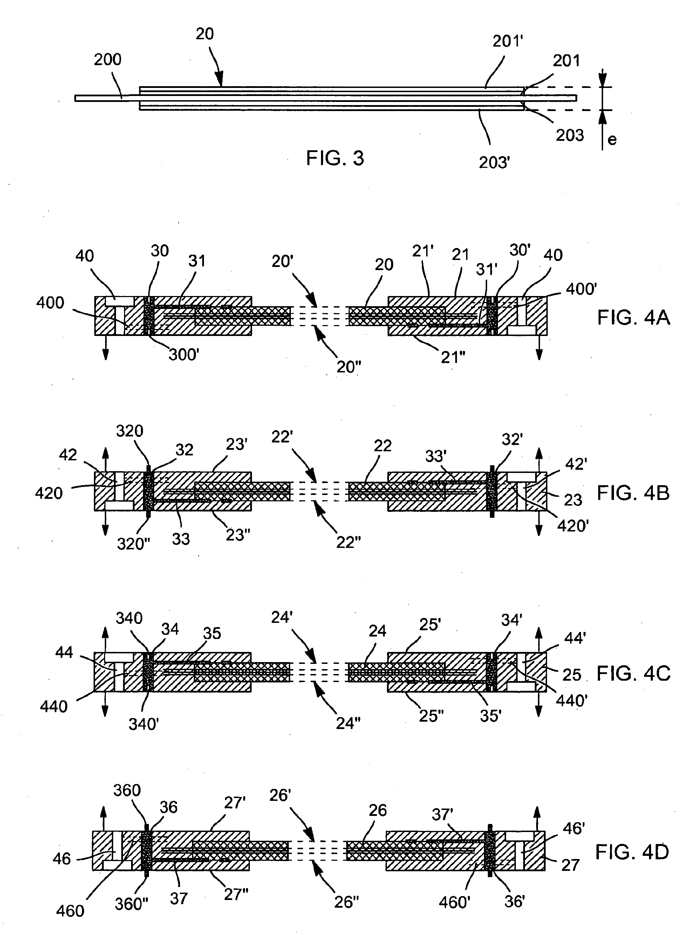

La figure 3 représente, en coupe, l'AME 20, avec la membrane 200, ses électrodes 201, 203 et les revêtements 201', 203'. Les épaisseurs des différentes couches et des différents revêtements sont accentuées pour des questions de clarté sur cette figure. L'ensemble a par exemple une épaisseur e sensiblement comprise entre, typiquement, 250 µm et 500 µm.

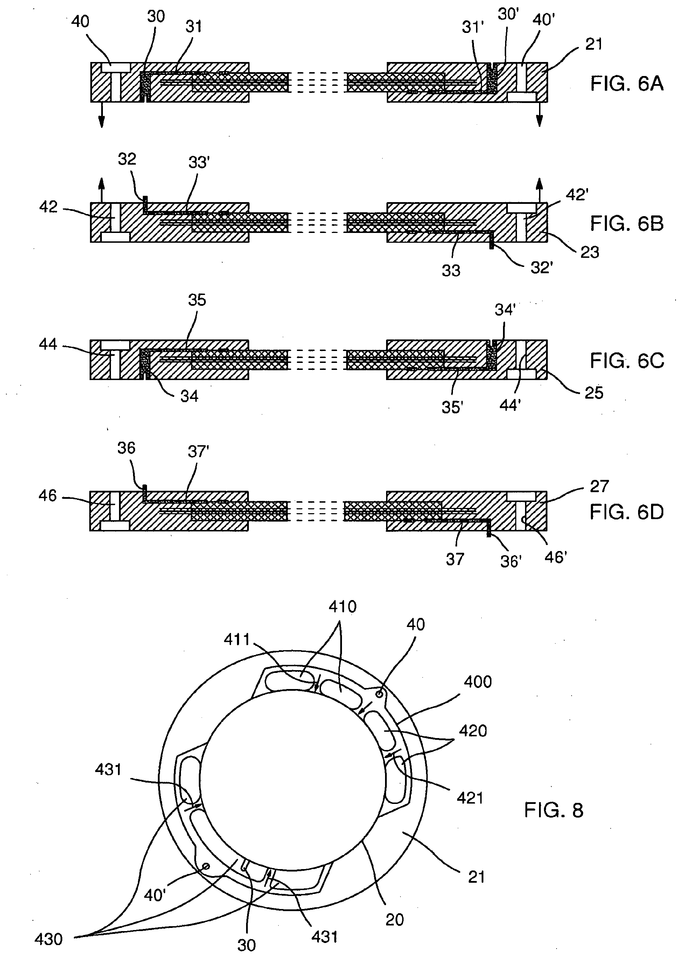

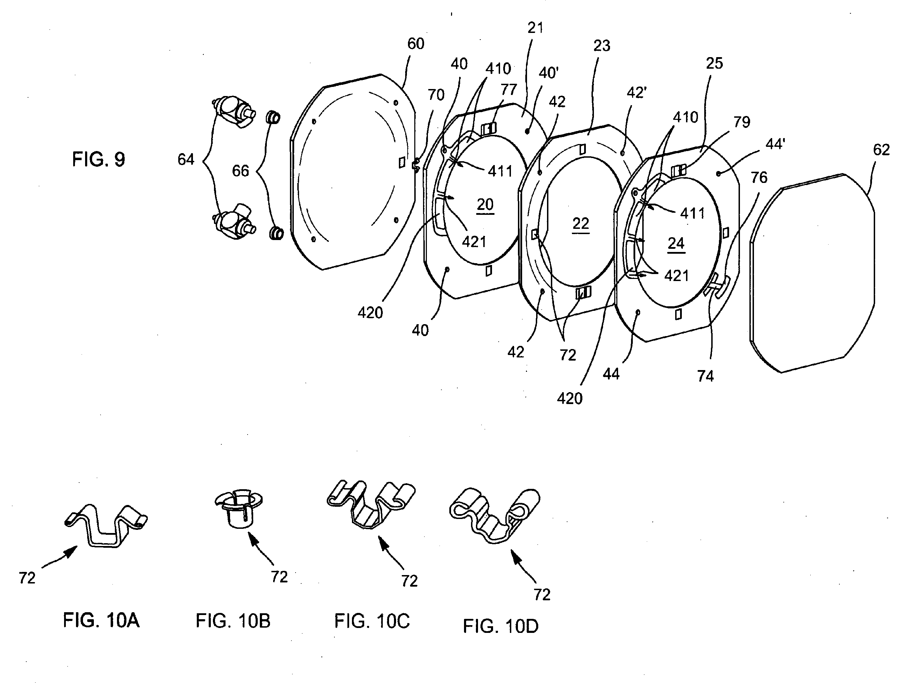

Un exemple de réalisation d'un élément selon l'invention pour un montage en parallèle est illustré sur chacune des figures 4A-4D, où une cellule ou un élément de pile comporte une AME 20, 22, 24, 26 et un support 21, 23, 25, 27 d'AME (ou cadre ou moyens de maintien), moulé à la périphérie de l'AME et réalisé en une matière de type thermoplastique. Des exemples de ces supports, selon des vues en perspective ou de face, sont visibles sur les figures 8 et 9. On voit que chaque support entoure complètement l'AME correspondante.

Dans chacun des supports 21, 23, 25, 27 sont réalisés des passages latéraux 40, 42, 44, 46 et 40', 42', 44', 46' pour les alimentations en gaz, respectivement en hydrogène et en oxygène ou en air. Chacun de ces passages est de préférence de forme sensiblement cylindrique, avec un axe disposé selon une direction sensiblement perpendiculaire à un plan défini par chacun des AME 20, 22, 24, 26. Comme expliqué plus loin, des canaux secondaires 400, 400', 420, 420', 440, 440', 460, 460' permettent ensuite une distribution des gaz depuis les passages latéraux 40 - 46 et 40' - 46' vers les AME et un retour de ces gaz depuis les AME vers les passages latéraux. Le matériau des supports 21, 23, 25, 27 est étanche ou imperméable aux fluides devant circuler dans les passages latéraux et les canaux secondaires (le coefficient de perméation de ce matériau est de préférence inférieur à 6 x 10⁻¹⁷ m²/s.Pa).

Dans chacun de ces supports sont également réalisés des inserts conducteurs 30, 31, 30', 31', 32, 32', 33, 33', 34, 35, 34', 35', 36, 37, 37', 36'. Ces inserts comportent des conducteurs principaux 30, 32, 34, 36 et 30', 32', 34', 36', ou conducteurs latéraux, chacun de forme de préférence sensiblement rectiligne, ou cylindrique, et également disposé selon une direction sensiblement perpendiculaire à un plan défini par chacun des AME 20, 22, 24, 26. À partir de ces conducteurs latéraux, des conducteurs 31, 31', 33, 33', 35, 35', 37, 37' dits secondaires, sont disposés, par exemple de manière sensiblement radiale, pour relier électriquement une électrode de l'AME du support dans lequel ils sont réalisés au conducteur latéral correspondant. Ainsi, sur le montage en parallèle de la figure 4A, les conducteurs 31, 31' relient les conducteurs latéraux 30, 30' à chacune des électrodes de la membrane 20. Il en va de même pour, par exemple, le conducteur 37' (respectivement 37) qui relie le conducteur latéral 36' (respectivement 36) à l'une des électrodes de la membrane 26.

Comme on le voit sur l'ensemble des figures 4A-4D :
- un élément sur deux a des moyens de connexion électrique tels que chaque électrode de l'AME est reliée à un conducteur latéral (par exemple : chaque électrode de l'AME 20 est reliée aux conducteurs latéraux 30, 30' -qui traversent tout l'anneau 21- par les conducteurs 31, 31'),
- un élément sur deux a des moyens de connexion électrique tels que chaque électrode de l'AME est reliée à un conducteur latéral (par exemple : une électrode de l'AME 22 est reliée au conducteur latéral 32' -qui traverse tout l'anneau 23- par le conducteur 33), tandis que l'autre conducteur latéral traverse tout l'anneau 23, et est relié à l'autre électrode de l'AME 22.

Afin d'assurer un bon contact électrique entre les différents tronçons de conducteurs latéraux 30, 32, 34, 36 et 30', 32', 34', 36' certains d'entre eux sont équipés de plots de contact tels que les plots 320, 320' et 360, 360', destinés à être introduits dans des ouvertures correspondantes 300', 340, 340' des tronçons de conducteur des supports de membranes immédiatement voisins.

Cette réalisation des contacts électriques sous forme d'inserts conducteurs n'est pas la seule possible, on verra plus loin un autre mode de réalisation pour cette fonctionnalité.

Quel que soit le mode de réalisation envisagé pour l'ensemble des moyens de connexion électrique, ceux-ci, sont, comme les moyens de circulation des gaz, positionnés et intégrés dans des parties latérales des moyens de maintien 21, 23, 25, 27 de manière à ce que les parties actives des membranes 20, 22, 24, 26 restent complètement libres.

Les éléments des figures 4A-4D sont destinés à être assemblés deux à deux, comme l'indiquent les flèches situées sur les faces des moyens de maintien 21, 23, 25, 27 et de la manière expliquée plus loin. L'assemblage a lieu par mise en contact des faces 21" et 23', 23" et 25', 25" et 27'. Les parties actives 20', 20", 22', 22'', 24', 24'', 26', 26" des membranes 20, 22, 24, 26 sont donc libres de tout contact avec une plaque, à la différence des structures connues qui mettent en oeuvre des plaques bipolaires (voir structure des figures 1A-1C et les problèmes associés, en particulier ceux décrits en liaison avec la figure 2C).

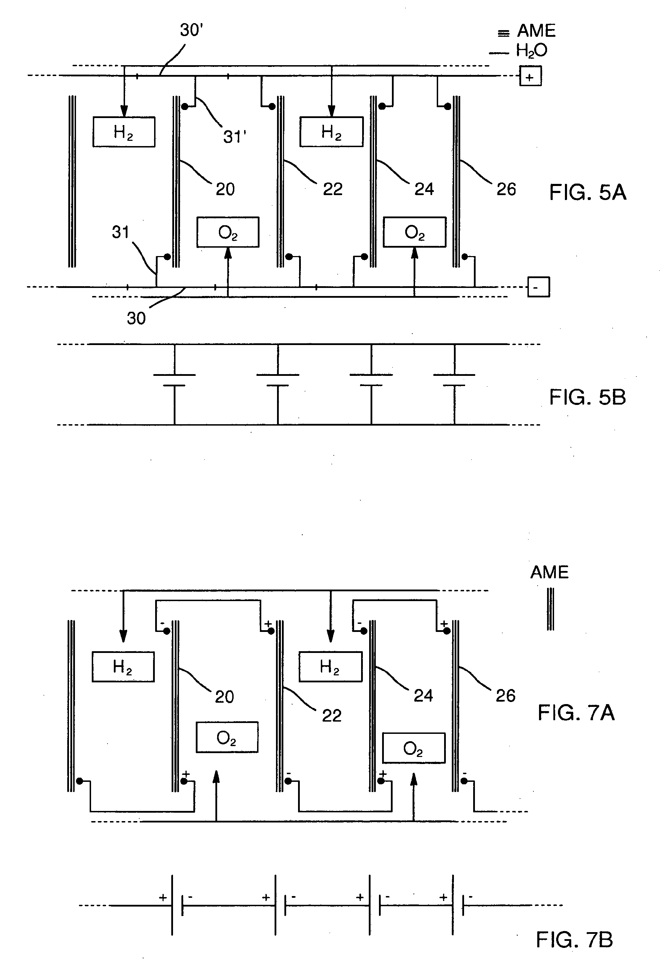

Compte tenu de la structure des moyens électriques de connexion (connecteurs latéraux principaux et connecteurs secondaires) qui ont été décrits ci-dessus en liaison avec les figures 4A-4D, l'assemblage des divers éléments de ces figures conduit à un ensemble de cellules assemblées en parallèle. Le schéma électrique équivalent de ces cellules est celui de la figure 5B. La figure 5A représente de manière schématique chacune des membranes 20, 22, 24, 26 avec ses connexions électriques 30, 32, 34, 36 et 30', 32', 34', 36'et les moyens d'injection de gaz.

Un autre exemple de réalisation d'un élément selon l'invention est illustré sur chacune des figures 6A-6D correspondant à une pile montée en série.

Les membranes 20, 22, 24, 26 utilisées sont les mêmes que celles décrites ci-dessus en liaison avec les figures 4A-4D. De même, les supports 21, 23, 25, 27 des AME ainsi que les moyens 40, 42, 44, 46 et 40', 42', 44', 46' de circulation des gaz ne sont pas différents de ceux déjà décrits ci-dessus.

Ce mode de réalisation diffère du précédent simplement par les moyens de connexion électrique 30, 31, 30', 31', 32, 33, 32', 33', 34, 35, 34', 35', 36, 37, 36', 37' qui permettent de réaliser ici une connexion des différents éléments en série. Les tronçons principaux 30, 30', 32, 32', 34, 34', 36, 36' ne traversent donc pas complètement les supports 21, 23, 25, 27 d'enrobage. La répartition des tronçons ou connecteurs secondaires est également différente de celle des figures 4A-4D. Ainsi, le connecteur 31 relie l'extrémité du connecteur latéral 30 contenue dans le support 21 à une des électrodes de l'AME 20, tandis que l'autre connecteur 31' relie l'autre électrode de l'AME 20 à l'extrémité du deuxième connecteur latéral 30' située elle aussi dans le support 21. L'autre extrémité de chaque connecteur latéral 30, 30' débouche sur une des deux faces de l'élément. Cette répartition est la même pour tous les éléments qui sont reliés en série du point de vue électrique.

Là encore, la réalisation des contacts électriques sous forme d'inserts conducteurs n'est pas la seule possible, comme on le verra plus loin.

Quelle que soit la structure des moyens électriques de connexion, donc la disposition des connecteurs latéraux et des connecteurs secondaires de ces figures 6A-6D, l'assemblage deux à deux des divers éléments de ces figures (là encore selon les flèches situées sur les faces des moyens de maintien 21, 23, 25, 27, par mise en contact des faces 21" et 23', 23" et 25', 25'' et 27') conduit à un ensemble de cellules assemblées en série.

Le schéma électrique équivalent de ces cellules est celui de la figure 7B.

La figure 7A représente de manière schématique chacune des membranes 20, 22, 24, 26 avec ses connexions électriques 30, 32, 34, 36 et 30', 32', 34', 36'et les moyens d'injection de gaz.

Dans les modes de réalisation ci-dessus, ont été présentés d'une part un schéma électrique en parallèle, et, d'autre part, un schéma électrique en série. Un empilement d'éléments selon l'invention peut également être réalisé, avec des éléments disposés en série et des éléments disposés en parallèle par exemple pour les applications fortes puissance-basse tension.

Sur les figures 4A-4D et 6A-6D les références 400, 400, 400', 420, 420', 440, 440', 460, 460' symbolisent des canaux d'amenée des gaz, depuis les canaux latéraux 40 - 46 et 40' - 46' en direction de l'AME. Ces canaux d'amenée des gaz sont réalisés dans le volume de l'anneau ou des moyens de maintien correspondants, sans dépasser les surfaces extérieures 21', 21", 23', 23", 25', 25", 27', 27", ce qui confère une grande compacité à chaque élément. Un exemple de canaux réalisés dans les moyens de maintien 21 est donné en figure 8 qui représente un élément vu de face, avec son AME 20 et son support 21. Outre les canaux latéraux 40, 40', sensiblement perpendiculaires à la figure, des canaux secondaires 400, 400' sont gravés dans le support 21. Ils peuvent aussi être obtenus lors d'un moulage ou d'une mise en forme de la matière destinée à former le support, donc sans nécessité, ensuite, de gravure. Ils définissent une direction d'écoulement des gaz sensiblement dans le plan du support (ou de la figure 8), faisant apparaître des îlots 410, 420, 430 (portions non gravées du support 21) que les gaz contourneront lors de leur circulation dans ce support 21, après introduction par les canaux principaux 40, 40'. Ces îlots sont également visibles sur la figure 9, commentée plus loin. Cette circulation des gaz vers l'AME est représentée sur les figures 8 et 9 par les flèches 411, 421, 431. Une circulation inverse, pour l'évacuation des gaz, de l'AME vers les canaux 40, 40', a lieu également, mais n'est pas représentée sur la figure pour des raisons de clarté. Sur l'autre face de l'élément de la figure 8 sont également gravés des canaux pour la circulation d'un autre gaz. Ces canaux peuvent définir une géométrie identique ou similaire à celle représentée en figure 8, ou une géométrie différente. En ce qui concerne les contacts électriques, n'est représenté sur la figure 8 que la trace du contact 30. Les contacts électriques sur chaque AME se font de toute façon de manière séparée du circuit de gaz, pour éviter les risques de corrosion.

Comme il apparaît clairement sur ces figures 4A-4D et 6A-6D, les moyens de circulation des gaz sont déportés sur le pourtour des AME : au contraire des dispositifs de structures connues, les gaz n'ont pas à être amenés au contact de la surface active via des canaux 16 disposés directement en regard des surfaces actives des AME (cf structure des figures 1A-1C), mais sont amenés, depuis la périphérie des supports, par un ensemble de canaux de distribution qui entoure chaque AME.

Deux membranes flottantes voisines limitent une chambre de fluide. Cette chambre de fluide est alimentée en fluide par les moyens de maintien de ces membranes.

Le fluide peut alors s'épandre librement sur toute la surface de la membrane : il est alors confiné entre cette membrane et la membrane voisine qui lui est superposée lorsqu'un empilement d'éléments est réalisé. Deux éléments voisins sont assemblés de façon à ce qu'une chambre voit un seul type d'électrodes, chaque électrode étant associée à un des deux éléments.

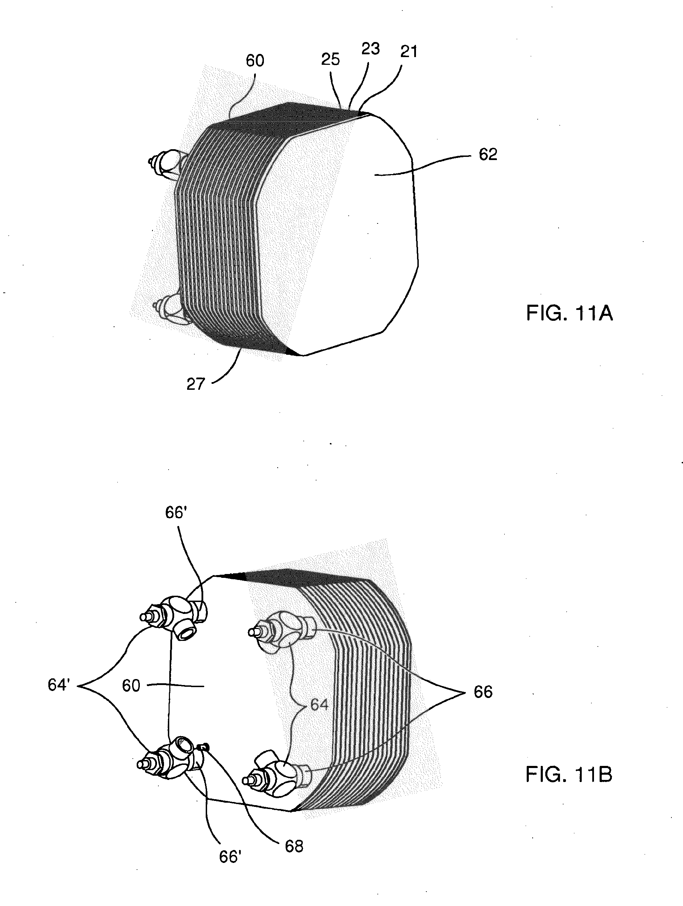

La figure 9 représente un assemblage de plusieurs éléments 20, 22, 24 selon l'invention, en vue de réaliser une pile à combustible. Seuls trois éléments sont représentés sur la figure, mais une pile à combustible pour comporter un empilement d'un nombre quelconque d'éléments selon l'invention. Ainsi, sur chacune des figures 11A et 11B est représenté, selon deux vues différentes, un assemblage de 15 éléments selon l'invention. Comme déjà expliqué ci-dessus, les anneaux ou supports 21, 23, 25 sont formés, de préférence surmoulées, sur la périphérie de chacune des membranes 20, 22, 24.

Les éléments actifs 20, 22, 24,... sont compris entre un couvercle ou une face d'entrée 61 et un couvercle ou une face 62 de fermeture. Le couvercle d'entrée 61 supporte des inserts 66 sur lesquels peuvent être fixés des régulateurs de débit 64, 64'. Ces derniers sont par exemple de type « banjo ». On peut aussi utiliser des régulateurs en ligne, qui sont plus encombrants, mais qui facilitent la connexion avec une cartouche d'hydrogène. Selon encore une autre variante, on peut utiliser, à la place de ces régulateurs, des blocs gicleurs préréglés.

Des inserts 66, 66' sur la figure 11B permettent la connexion des régulateurs de débit ou des blocs gicleurs sur le couvercle d'entrée 60. Ils peuvent être surmoulés, ou soudés par ultrasons, ou sertis par expansion.

Sur la figure 11B on retrouve l'ensemble de ces éléments, avec, en outre, deux autres inserts 66' auxquels viennent se connecter deux autres moyens 64' qui sont également de type régulateur de débit (par exemple du type mentionné ci-dessus) ou de type bloc gicleur. On distingue également, sur cette figure, des moyens 68 pour réaliser une connexion électrique extérieure. Ces moyens peuvent avoir par exemple la forme d'un goujon sur lesquels peuvent se visser des cosses à oeillet ou à fourche. D'autres types de moyens de connexion peuvent être réalisés, : par exemple, des cosses mâle/femelle, plates ou rondes.

Sur la figure 9 apparaissent également d'autres éléments.

Un connecteur interne 70, pour pôle positif, assure le contact électrique entre la première face du premier AME 20 et le connecteur extérieur 68.

Dans le mode de réalisation présenté sur cette figure, deux connecteurs internes 72 permettent de connecter électriquement deux faces d'AME de même polarité. Les moyens de connexion électrique sont donc différents de ceux qui ont été décrits sur les figures 4A-4D et 6A-6D. Ici, il ne s'agit donc pas d'inserts conducteurs, mais de contacts électriques formés par des connecteurs 72 introduits (ou « clipsés ») dans des ouvertures 77, 79, et maintenus par effet ressort dans ces ouvertures. D'autres solutions peuvent être réalisées pour renforcer le contact, en particulier des solutions de type mini-rivets en plastique ou adhésif double face conducteur ; plus généralement, un anneau sur deux (ici l'anneau 23) est équipé de deux connecteurs internes 72, permettant d'établir le contact électrique avec la membrane 20 de l'anneau 21 précédent et la membrane 24 de l'anneau 25 suivant. Sur les figures 10A-10D sont représentés divers exemples de connecteur 72. Ces connecteurs, comme les pièces 70, 74, 76, seront de préférence réalisés en alliage de cuivre, par exemple par pliage, ou emboutissage, ou profilage, ou décolletage.

La réalisation des moyens de connexion est plus aisée à mettre en oeuvre que celle des inserts conducteurs des figures 4A-4D, 6A-6D : ces derniers doivent être réalisés lors des opérations de moulage des supports 21, 23, 25, tandis que les ouvertures 77, 79, les connecteurs 72 et leur introduction dans lesdites ouvertures peuvent être aisément réalisés après ces opérations de moulage.

La référence 74 désigne un circuit de retour : il s'agit d'une pièce qui, partant de l'anneau situé le plus près de la face 62 de fermeture, traverse tous les anneaux 21, 23, 25 empilés, afin de les relier au connecteur extérieur 68. Cette pièce 74, formant circuit de retour, peut-être plate ou cylindrique.

Un connecteur 76, pour pôle négatif, assure le contact électrique entre la dernière face du dernier AME 24 et le circuit de retour 74.

Le couvercle d'entrée 60 porte les moyens d'entrée et de sortie des circuits de gaz et assure le maintien des deux connecteurs électriques 70 - inséré directement dans la face d'entrée -et 76- inséré dans le dernier élément 25, avant la face de sortie 62. Celle-ci délimite le point le plus éloigné de chaque circuit de gaz, avant retour vers les points de sortie 64, 64' de la face d'entrée 60.

Les divers éléments 60, 21, 23, 25, 62 de la figure 9 -comme ceux des figures 4A à 4D et 6A à 6D-sont destinés à être assemblés par soudure, par exemple par ultrasons ou par miroir chauffant, ou par laser. Une autre technique d'assemblage est le collage, mais l'étanchéité est moins bonne que celle de la technique de soudure.

Un avantage d'une structure d'élément selon l'invention -qui ne comporte aucune plaque bipolaire-est que chaque élément est libre de tout contact avec d'autres éléments : il n'y a donc pas de contact avec des plaques bipolaires telles que celles utilisées dans les dispositifs de l'art antérieur, ce qui permet une circulation totalement libre des gaz réactifs (oxygène et hydrogène) entre les AME. Cet avantage apparaît clairement sur les empilements des figures 4A-4D et 6A-6D, sur lesquelles les faces actives 20', 20", 22', 22", 24', 24", 26', 26" des membranes 20, 22, 24,26 sont libres de tout contact avec tout autre élément. En outre, les moyens d'alimentation en gaz et les moyens de connexion électrique sont déportés latéralement, dans les supports d'AME.

Un autre avantage est que cette structure est compatible avec n'importe quelle surface et n'importe quelle forme d'AME : quel que soit la taille de ce dernier, il peut être enrobé dans un anneau de maintien tel que les anneaux 21, 23, 25, 27.

Une matière pouvant être utilisée pour réaliser ces anneaux ou supports moulés autour de chaque AME est un polymère, de type thermoplastique. Il est possible d'accroître les propriétés d'étanchéité d'un tel matériau en réalisant une cristallisation lente. À titre d'exemple, on peut utiliser du polyéthylène, ou du polypropylène, ou du polystyrène, ou du COC (cyclo-oléfine-cyclo aliphatique), ou PTFE (ou téflon), ou PET, ou PEEK (polyéther-poly-acétone).

Les inserts utilisés pour réaliser les éléments de contact électrique (désignés par les références 30, 31, 30', 31', 32, 33, 32', 33', 34, 35, 34', 35', 36, 37, 36', 37' sur les figures 6A - 6D) peuvent être métalliques, ou bien encore en un polymère conducteur, par exemple un polymère à nanotubes de carbone ou à nanofils tels que déjà mentionnés ci-dessus. L'utilisation d'inserts métalliques n'exclut pas tout risque de fuite. Par contre, un polymère conducteur va, au moment de l'assemblage de deux éléments voisins, par effet thermique comme expliqué plus loin, fusionner avec le polymère qui l'entoure, ce qui assure une étanchéité parfaite, grâce au surmoulage.

Il est en outre possible, au moment de l'opération d'injection du polymère, d'ajouter, à la matière injectée, des nanotubes de carbone pour améliorer l'évacuation de la chaleur par le matériau de moulage lors du fonctionnement de l'élément. L'utilisation de noir de carbone pour obtenir cet effet est également possible. Mais, l'ajout de nanotubes de carbone est efficace dès lors que ces nanotubes sont présents en très faible proportion (il suffit de 0,1 % en masse) alors qu'il faut des proportions beaucoup plus importantes (au moins 40 % en masse) de noir de carbone pour obtenir le même effet. Pour conserver les propriétés d'isolant électrique des nanotubes, ceux-ci peuvent être gainés dans un polyéthylène.

On peut également utiliser des nanofils, par exemple des nanofils de silicium, et/ou de carbone et/ou de cuivre et/ou d'aluminium, par exemple dans une proportion comprise entre 1 % et 5 % en masse.

L'ajout, dans la matière de moulage, d'un composant permettant l'évacuation de la chaleur présentera d'autant plus d'intérêt que la pile mise en oeuvre fournit une puissance élevée.

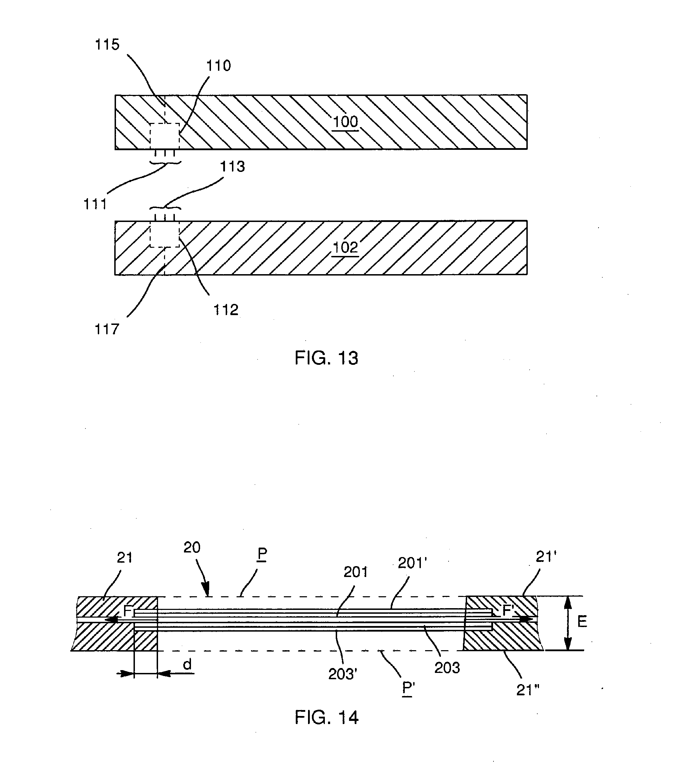

Comme illustré sur la figure 14, les moyens de maintien (ici : le moulage de l'anneau 21) vont permettre de mouler ou d'enrober les bords de la membrane de chaque côté de chaque AME, et aussi les bords de chaque électrode 201, 203 et son revêtement 201', 203', de part et d'autre de la membrane. Les matériaux des électrodes et du revêtement étant poreux, le polymère va les pénétrer totalement, ce qui renforce le maintien mécanique de l'ensemble par la matière moulée. Plus précisément, le polymère peut pénétrer la matière poreuse, qui constitue chaque électrode et le revêtement, correspondant, sur une distance d de l'ordre de quelques millimètres, par exemple comprise entre 1 mm et 5 mm. L'anneau 21 lui-même a une épaisseur E sensiblement comprise entre 1 mm et 3 mm.

Le moulage va permettre d'appliquer une tension mécanique (symbolisée sur la figure 14 par les flèches F, F') à la membrane, à ses électrodes et à son revêtement. La tension appliquée sera telle que la membrane ne puisse pas se déformer au-delà d'une limite définie, de chaque côté de l'ensemble « membrane-élément de maintien », par un plan P, P' qui s'appuie sur la surface extérieure 21', 21" du support et qui est donc sensiblement parallèle à la membrane. De préférence, la tension appliquée permet de tenir compte de l'effet de l'eau sur la membrane, qui va détendre cette dernière, en cours d'utilisation, d'environ 10 %.

Les considérations ci-dessus valent non seulement pour l'AME 20 et l'élément correspondant de la figure 4A, mais aussi pour chacun des AME des figures 4B-4D et 6A-6D.

Un procédé pour réaliser une cellule selon l'invention va maintenant être décrit.

Il s'agit d'un procédé dans lequel on moule un cadre ou un support sur la périphérie d'une AME, par exemple par injection d'un polymère thermoplastique dans un moule.

Dans une première étape, ce moulage, ou surmoulage, permet de réaliser directement, autour de l'AME, un cadre ou un support qui l'encastre de façon étanche à l'hydrogène et à l'oxygène.

Le surmoulage est sans joint, sans organe de serrage et intègre des canaux de distribution de gaz et de récupération de l'eau produite à la cathode (ce sont par exemple les canaux 40, 40' de la figure 4A).

Une deuxième étape peut être le surmoulage d'inserts métalliques, ou par injection d'un polymère nanocomposite conducteur à base de nanotube de carbone ou de tous objets conducteurs. La forme et la disposition de ces inserts surmoulés permettent d'effectuer, selon les besoins des applications, un assemblage en parallèle (cas des figures 4A-4D, 5A, 5B), ou en série (cas des figures 6A-6D, 7A, 7B) ou une combinaison de ces deux configurations. Le design des inserts et leurs dispositions déterminent la configuration électrique finale.

Si les moyens de connexions électriques ont la forme décrite ci-dessus en liaison avec la figure 9, la deuxième étape ne comporte alors pas d'opérations de surmoulage d'inserts métalliques, mais la simple réalisation par découpage d'ouvertures 77, 79 (voir figure 9) et l'introduction, dans ces ouvertures, des connecteurs 72 correspondants.

L'un des avantages de la technique d'injection est la reproductibilité des cotes de chaque pièce, même si chacune de ces cotes n'est pas d'une précision extrême. On évite ainsi les problèmes liés à la précision nécessaire lors de l'utilisation d'une technique telle que celle décrite dans le document US 2003/235 744.

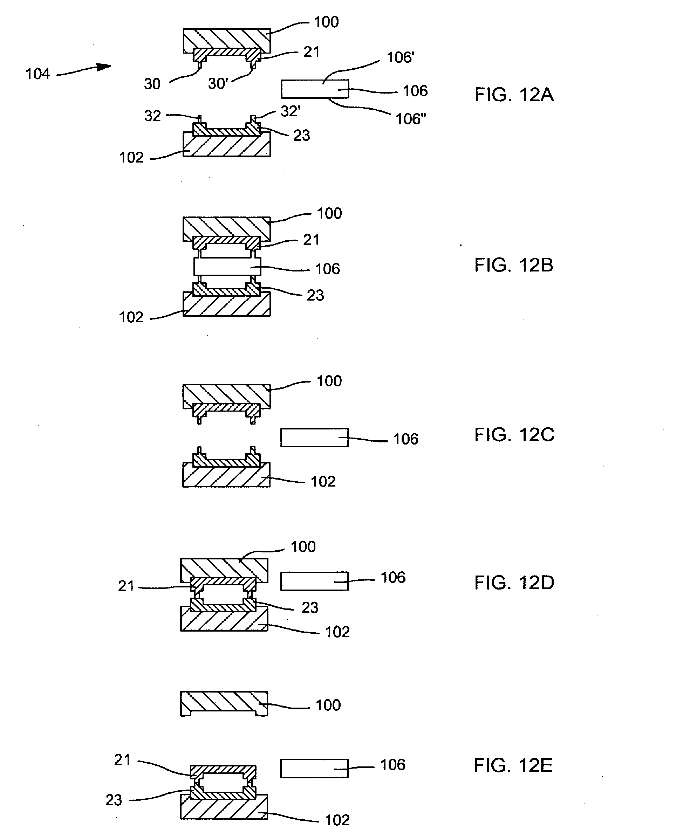

L'assemblage des éléments est de préférence effectué par un procédé de soudure (figures 12A-12E). Comme déjà expliqué ci-dessus, un assemblage par collage est également possible, mais moins efficace du point de vue de l'étanchéité.

Pour mettre en oeuvre un procédé de soudure, on utilise de préférence la technique du « miroir chauffant » ainsi que deux mâchoires 100, 102 d'une presse 104. Sur chacune de ces mâchoires est positionnée l'une des deux pièces à assembler ; on prendra ici l'exemple des éléments des figures 4A et 4B. Les deux éléments sont ici positionnés de manière à être alignés l'un avec l'autre. L'alignement peut être réalisé par utilisation des moyens de contact électrique 30, 30', 32, 32' réalisés dans les parties isolantes des deux éléments à assembler. Par exemple, on mesure la résistance à travers les deux éléments positionnés l'un contre l'autre par fermeture des mâchoires, mais non encore assemblés définitivement.

On va ensuite réaliser une fusion des surfaces des supports des AME à mettre en contact, autant sur les parties isolantes que sur les parties conductrices (c'est-à-dire les extrémités des portions conductrices 30, 30', 32, 32' ou les extrémités des conducteurs 72 après introduction de ceux-ci dans les orifices correspondants).

Une lame 106 (miroir chauffant) comporte une résistance interne qui permet à ses surfaces 106', 106" d'atteindre une température prédéterminée.

La lame chauffante, portée à la température voulue, est ensuite mise en position entre les deux éléments (voir figure 12B), que les mâchoires 100, 102 de la presse amènent en position contre la plaque chauffante 106. Cette étape permet de porter chacune des deux surfaces à assembler à la température voulue.

Les mâchoires éloignent ensuite les deux éléments de la lame chauffante 106, qui est alors rapidement retirée (figure 12C).

Les deux mâchoires de la presse peuvent ensuite être de nouveau rapprochées l'une de l'autre, jusqu'à ce que les deux éléments à assembler soient en contact l'un avec l'autre (figure 12D). Cette position de contact est maintenue pendant le refroidissement.

Il n'est pas nécessaire de fortement serrer les deux éléments à assembler, ce qui constitue une différence très importante par rapport aux techniques connues dans l'art antérieur : on évite tous les problèmes qui résultent des opérations de serrage, problèmes déjà expliqués en détail dans l'introduction à la représente demande. Une pression de serrage d'environ 0,5 MPa est suffisante : une telle pression est, par la nature du procédé choisi, répartie uniformément sur les surfaces en contact, et, en outre, pas sur le coeur de la membrane.

L'une des deux mâchoires, ici la mâchoire supérieure, peut ensuite être écartée (figure 12E) : l'assemblage des deux éléments est donc réalisé par l'intermédiaire des enrobages polymères uniquement.

Après mise en fusion, les deux éléments sont assemblés et le refroidissement lent assemble les deux cellules de façon définitive, étanche, sans joint et sans organe de serrage. La zone de soudure est constituée de polymère recristallisé qui possède d'excellentes propriétés d'étanchéité et mécaniques. Au cours de cette opération d'assemblage, les mouvements de cisaillement sont très faibles, car seule une très faible épaisseur de chaque élément en matériau d'enrobage est en fusion (typiquement environ 2 µm).

Ces deux éléments assemblés forment à leur tour un ensemble qui peut être lui-même assemblé avec un autre élément ou avec un autre ensemble d'éléments déjà assemblés. On peut donc réaliser progressivement un empilement d'un nombre quelconque d'éléments, par exemple du type illustré sur les figures 11A, 11B déjà commentées ci-dessus. Les éléments de contact 70, 72, 76 ne dépassent pas. De plus les IR chauffent les polymères et non les pièces métalliques.

La technique d'assemblage décrite ci-dessus peut être mise en oeuvre dès lors que le matériau utilisé pour réaliser les anneaux est thermofusible à T < 300°C.

Comme déjà indiqué ci-dessus, un moyen d'alignement de deux éléments positionnés dans une presse, avant thermo-assemblage, consiste à réaliser un contrôle de la conductivité électrique à travers l'ensemble des deux éléments superposés et en contact. D'autres techniques d'alignement peuvent être mises en oeuvre comme des plots de centrage inclus dans les éléments.

À cette fin, les mâchoires 100, 102 de la presse 104 peuvent être équipées de moyens de mesure de la résistance ou de la résistivité à travers un empilement de deux ou plusieurs éléments assemblés entre les deux mâchoires. Une structure à deux mâchoires pouvant être avantageusement utilisée est donc illustrée sur la figure 13. Ces deux mâchoires sont équipées de moyens 110, 112 destinés à venir en contact, par exemple par des plots ou des zones de contact 111, 113, avec les moyens de contact situés dans la matière d'enrobage. Il peut y avoir plusieurs plots ou zones de contact à la surface de chacune des mâchoires, comme c'est le cas d'ailleurs sur la figure 13, de manière à pouvoir réaliser des tests de conductivité électrique en divers points de chacune des surfaces situées en regard des mâchoires.

Lors d'un test d'alignement, des moyens de mesure (non représenté sur la figure 13) peuvent être reliés aux moyens 110, 112 par l'intermédiaire des liaisons électriques 115,117.

Il est également possible de prévoir un emplacement, dans chacune des mâchoires 100, 102, pour recevoir un module de contact adapté à la forme de certains éléments d'enrobage. Ainsi, lorsque la forme des éléments à assembler varie, la zone de contact peut être adaptée sans que la mâchoire perde sa fonction de contrôle électrique.

Une structure de cellule selon l'invention permet de réaliser une pile, par assemblage d'une pluralité de telles cellules, dont la densité de puissance est nettement supérieure aux densités usuellement rencontrées dans ce type de dispositif. Ainsi, des densités supérieures à 400 W/kg sont aisément obtenues alors que, avec des membranes identiques et de même taille, les techniques connues ne permettent de réaliser que des cellules dont la densité de puissance est de l'ordre de 200 à 250 W par kilo. Une pile selon l'invention ne comporte plus aucune plaque bipolaire, ni aucun joint, ni aucune plaque de serrage. En outre, il n'est pas nécessaire de maintenir les différents éléments avec des pressions importantes, puisque la soudure ou le collage permet d'assurer le maintien des éléments.

## Revendications

1. Élément de pile à combustible, comportant :
- un assemblage d'une membrane (200), d'une première et d'une deuxième électrodes (201, 203),
- et des moyens (21, 23, 25, 27) de maintien de cet assemblage, qui forment support en périphérie de celui-ci et qui comportent des moyens (30, 31, 30', 31', 32, 33, 32', 33', 34, 35, 34', 35', 36, 37, 36', 37', 72) de connexion électrique et des moyens (40, 42, 44, 46, 40', 42', 44', 46', 400, 400, 400', 420, 420', 440, 440', 460, 460') de circulation de fluide et d'amenée de ce fluide vers ledit assemblage, ces moyens de maintien appliquant une tension (F, F') à la membrane telle que, de chaque côté de l'ensemble membrane-élément de maintien, celle-ci ne puisse pas se déformer au-delà d'un plan, (P, P') qui s'appuie sur la surface extérieure (21', 21'') du support et qui est sensiblement parallèle à la membrane.

2. Élément selon la revendication 1, les moyens de maintien de l'assemblage étant en un polymère thermoplastique.

3. Élément selon la revendication 2, le polymère thermoplastique comportant du polyéthylène, ou du polypropylène, ou du polystyrène, ou du COC (cyclo-oléfine-cyclo aliphatique), ou du PTFE (ou téflon), ou du PET, ou du PEEK (polyéther-poly-acétone) et/ou comportant en outre des nanotubes de carbone ou du noir de carbone ou des nanofils de silicium, et/ou de carbone et/ou de cuivre et/ou d'aluminium.

4. Élément selon l'une des revendications 1 à 3, les moyens de connexion électrique comportant au moins un insert conducteur relié à au moins une des électrodes de la membrane.

5. Élément selon l'une des revendications 1 à 4, les moyens de connexion électrique étant métalliques, ou en un polymère conducteur, par exemple un polymère à nanotubes de carbone ou à nanofils.

6. Élément selon l'une des revendications 1 à 5, les électrodes de chaque membrane étant en fibre de carbone ou en un tissage de fibres de carbone avec des fils d'or, ou de cuivre, ou d'aluminium et/ou étant en une matière poreuse, les moyens de maintien de l'assemblage étant en un matériau qui pénètre dans cette matière poreuse.

7. Élément selon l'une des revendications 1 à 6, les moyens de circulation et d'amenée de fluide comportant des canaux latéraux (40, 42, 44, 46, 40', 42', 44', 46') qui traversent le support, et des canaux (400, 400, 400', 420, 420', 440, 440', 460, 460') de distribution de fluide, depuis les canaux latéraux vers l'assemblage membrane-électrodes.

8. Élément selon la revendication précédente, les canaux de distribution de fluide comportant des îlots (410, 420, 430) qui guident le fluide (411, 421, 431) vers l'assemblage membrane-électrodes.

9. Élément selon l'une des revendications 1 à 8, les moyens de connexion électrique comportant au moins deux éléments conducteurs (30, 30', 32, 32', 34, 34', 36, 36') :
- qui traversent le support, et dont au moins l'un des deux est relié, par un conducteur secondaire (31, 31', 33, 35, 35', 37), à l'une des premières et deuxième électrodes (201, 203);
- et/ou qui ne traversent le support qu'en partie et depuis des faces différentes du support, et dont chacun d'entre eux est relié, par un conducteur secondaire, soit à l'une soit à l'autre des première et deuxième électrodes.

10. Pile à combustible, comportant un empilement d'éléments selon l'une des revendications 1 à 9, les moyens périphériques de maintien des AME étant deux à deux assemblés, les moyens de connexion électrique des AME voisines étant connectés entre eux et les moyens de circulation de fluide formant au moins un circuit d'écoulement de fluide à travers ledit empilement.

11. Pile à combustible selon la revendication 10, les éléments étant soudés deux à deux.

12. Pile à combustible selon l'une des revendications 10 ou 11, les moyens de connexion électrique étant assemblés de manière à former un circuit à montage en série ou un circuit à montage en parallèle ou à montage partiellement en série et partiellement en parallèle.

13. Pile à combustible selon l'une des revendications 10 à 12, l'empilement d'éléments étant compris entre une face d'entrée (61) et une face de sortie (62), la face d'entrée comportant des moyens (64,64') d'introduction de gaz, par exemple comportant au moins deux régulateurs de débit, et l'une des deux faces d'entrée et de sortie comportant des moyens (68) de connexion électrique.

14. Pile à combustible selon la revendication 13, comportant en outre des moyens (74) formant un circuit électrique de retour, entre la face qui comporte les moyens (68) de connexion électrique et l'élément (25) de l'empilement qui est le plus éloigné de cette face.

15. Procédé de réalisation d'un élément de pile à combustible, comportant :
a) une étape de moulage de la périphérie d'un assemblage d'une membrane (200), d'une première et d'une deuxième électrodes (201, 203), pour former des moyens (21, 23, 25, 27) de maintien dudit assemblage, ces moyens de maintien appliquant une tension (F, F') à la membrane telle que, de chaque côté de l'ensemble membrane-élément de maintien, celle-ci ne puisse pas se déformer au-delà d'un plan (P, P') qui s'appuie sur la surface extérieure (21', 21") du support et qui est sensiblement parallèle à la membrane,
b) une étape de réalisation, dans lesdits moyens de maintien :
b1) de moyens (30, 31, 30', 31', 32, 33, 32', 33', 34, 35, 34', 35', 36, 37, 36', 37', 72) de connexion électrique,
b2) de moyens (40, 42, 44, 46, 40', 42', 44', 46', 400, 400, 400', 420, 420', 440, 440', 460, 460') de circulation de fluide et d'amenée de ce fluide vers ledit assemblage membrane-électrodes.

## Patentansprüche

1. Brennstoffzellenelement, umfassend:
- eine Anordnung aus einer Membran (200), einer ersten und einer zweiten Elektrode (201, 203),
- sowie Mittel (21, 23, 25, 27) zum Halten dieser Anordnung, die eine periphere Stütze derselben bilden und die Mittel (30, 31, 30', 31', 32, 33, 32', 33', 34, 35, 34', 35', 36, 37, 36', 37', 72) zur elektrischen Verbindung sowie Mittel (40, 42, 44, 46, 40', 42', 44', 46', 400, 400, 400', 420, 420', 440 440', 460, 460') zum Zirkulieren von Fluid und zum Zuführen dieses Fluids zu der Anordnung umfassen, wobei diese Haltemittel eine Spannung (F, F') auf die Membran derart ausüben, dass diese sich auf jeder Seite der Anordnung aus Membran und Halteelement nicht über eine Fläche (P, P') hinaus verformen kann, die gegen die Außenoberfläche (21', 21") der Abstützung drückt und die im Wesentlichen parallel zur Membran ist.

2. Element nach Anspruch 1, wobei die Haltemittel der Anordnung aus einem thermoplastischen Polymer sind.

3. Element nach Anspruch 2, wobei das thermoplastische Polymer Polyethylen umfasst, oder Polypropylen, oder Polystyrol, oder COC (Cyclo-Olefin-Cycloaliphat), oder PTFE (oder Teflon), oder PET, oder PEEK (Polyether-Polyazeton), und/oder ferner Kohlenstoff-Nanoröhrchen umfasst oder Ruß oder Silizium-Nanodrähte, und/oder Kohlenstoff und/oder Kupfer und/oder Aluminium.

4. Element nach einem der Ansprüche 1 bis 3, wobei die elektrischen Verbindungsmittel wenigstens einen leitenden Einsatz umfassen, der mit wenigstens einer der Elektroden der Membran verbunden ist.

5. Element nach einem der Ansprüche 1 bis 4, wobei die elektrischen Verbindungsmittel aus Metall oder aus einem leitenden Polymer sind, beispielsweise einem Polymer mit Kohlenstoff-Nanoröhrchen oder mit Nanodrähten.

6. Element nach einem der Ansprüche 1 bis 5, wobei die Elektroden jeder Membran aus Kohlenstofffasern sind oder aus einem Gewebe von Kohlenstofffasern mit Drähten aus Gold oder aus Kupfer oder aus Aluminium, und/oder aus einem porösen Material sind, wobei die Haltemittel der Anordnung aus einem Material sind, das in dieses poröse Material eindringt.

7. Element nach einem der Ansprüche 1 bis 6, wobei die Mittel zum Zirkulieren und Zuführen von Fluid seitliche Kanäle (40, 42, 44, 46, 40', 42', 44', 46') umfassen, die die Abstützung durchsetzen, sowie Kanäle (400, 400, 400', 420, 420', 440, 440', 460, 460') zur Verteilung von Fluid von den seitlichen Kanälen hin zu der Membran-Elektroden-Anordnung.

8. Element nach dem vorhergehenden Anspruch, wobei die Kanäle zur Verteilung von Fluid Inselchen (410, 420, 430) umfassen, die das Fluid (411, 421, 431) hin zu der Membran-Elektroden-Anordnung führen.

9. Element nach einem der Ansprüche 1 bis 8, wobei die elektrischen Verbindungsmittel wenigstens zwei leitende Elemente (30, 30', 32, 32', 34, 34', 36, 36') umfassen:
- die die Abstützung durchsetzen und wobei wenigstens eines der beiden mittels eines Sekundärleiters (31, 31', 33, 35, 35', 37) mit der ersten oder der zweiten Elektrode (201, 203) verbunden ist;
- und/oder die die Abstützung nur teilweise und von unterschiedlichen Seiten der Abstützung her durchsetzen, und von denen jede mittels eines Sekundärleiters entweder mit der einen oder mit der anderen von der ersten und der zweiten Elektrode verbunden ist.

10. Brennstoffzelle, umfassend einen Stapel von Elementen nach einem der Ansprüche 1 bis 9, wobei die Umfangshaltemittel der AME paarweise zugeordnet sind, wobei die elektrischen Verbindungsmittel von benachbarten AME miteinander verbunden sind und wobei die Mittel zum Zirkulieren von Fluid wenigstens einen Fluidströmungskreis durch den Stapel hindurch bilden.

11. Brennstoffzelle nach Anspruch 10, wobei die Elemente paarweise verschweißt sind.

12. Brennstoffzelle nach einem der Ansprüche 10 oder 11, wobei die elektrischen Verbindungsmittel derart angeordnet sind, dass sie einen Reihenmontagekreis oder einen Parallelmontagekreis oder einen partiellen Reihenmontagekreis oder einen Kreis mit partieller Reihen- und partieller Parallelmontage bilden.

13. Brennstoffzelle nach einem der Ansprüche 10 bis 12, wobei der Elementenstapel zwischen einer Eingangsseite (61) und einer Ausgangsseite (62) enthalten ist, wobei die Eingangsseite Mittel (64, 64') zum Einführen von Gas umfasst, die beispielsweise wenigstens zwei Ratenregulierer umfassen, wobei die Eingangsseite oder die Ausgangsseite elektrische Verbindungsmittel (68) umfasst.

14. Brennstoffzelle nach Anspruch 13, ferner umfassend Mittel (74), die einen elektrischen Rückkopplungskreis zwischen der Seite, die die elektrischen Verbindungsmittel (68) umfasst, und dem Element (25) des Stapels bilden, das von dieser Seite am weitesten entfernt ist.

15. Verfahren zur Herstellung einer Brennstoffzelle, umfassend:
a) einen Schritt des Formens der Peripherie einer Anordnung aus einer Membran (200), einer ersten und einer zweiten Elektrode (201, 203), um Mittel (21, 23, 25, 27) zum Halten der Anordnung zu bilden, wobei diese Haltemittel eine Spannung (F, F') auf die Membran derart ausüben, dass sich diese auf jeder Seite der Anordnung aus Membran und Halteelement nicht über eine Fläche (P, P') hinaus verformen kann, die gegen die Außenoberfläche (21', 21") der Abstützung drückt und die im Wesentlichen parallel zur Membran ist,
b) einen Schritt der Realisierung, in den Haltemitteln:
b1) von Mitteln (30, 31, 30', 31', 32, 33, 32', 33', 34, 35, 34', 35', 36, 37, 36', 37', 72) zur elektrischen Verbindung;
b2) von Mitteln (40, 42, 44, 46, 40', 42', 44', 46', 400, 400, 400', 420, 420', 440, 440', 460, 460') zum Zirkulieren von Fluid und zum Zuführen dieses Fluids hin zu der Membran-Elektroden-Anordnung.

## Claims

1. Fuel cell element, comprising:
- an assembly of a membrane (200), a first and a second electrode (201, 203),
- and means (21, 23, 25, 27) for holding this assembly together, which form peripheral support thereof and which comprise electrical connection means (30, 31, 30', 31', 32, 33, 32', 33', 34, 35, 34', 35', 36, 37, 36', 37', 72) and means (40, 42, 44, 46, 40', 42', 44', 46', 400, 400, 400', 420, 420', 440, 440', 460, 460') for the circulation of fluid and for the supply of this fluid into said assembly, said means for holding together applying a strain (F, F') to the membrane such that, on each side of maintaining membrane element assembly, it cannot deform beyond a plane (P, P') that lies on the outer surface (21', 21") of the support and which is substantially parallel to the membrane.

2. Element according to claim 1, the means for holding the assembly together being made of a thermoplastic polymer.

3. Element according to claim 2, the thermoplastic polymer being made of polyethylene, or polypropylene, or polystyrene, or COC (cyclo olefin copolymer), or PTFE (or Teflon), or PET, or PEEK (polyether ether ketone) and/or further comprising nanotubes of carbon or carbon black or nanowires of silicon, and/or carbon and/or copper and/or aluminium.

4. Element according to one of claims 1 to 3, the electrical connection means comprising at least one conductive insert connected to at least one of the electrodes of the membrane.

5. Element according to one of claims 1 to 4, the electrical connection means being metal, or made of a conductive polymer, for example a polymer with carbon nanotubes or with nanowires.

6. Element according to one of claims 1 to 5, the electrodes of each membrane being made of carbon fibre or a weaving of carbon fibres with wires of gold, or copper, or aluminium and/or being made of a porous material, the means for holding the assembly together being made of a material that penetrates into said porous material.

7. Element according to one of claims 1 to 6, the means for the circulation and for the supply of fluid comprising lateral channels (40, 42, 44, 46, 40', 42', 44', 46') that traverse the support, and channels (400, 400, 400', 420, 420', 440, 440', 460, 460') for the distribution of fluid, from the lateral channels to the membrane electrode assembly.

8. Element according to the preceding claim, the fluid distribution channels comprising islands (410, 420, 430) that guide the fluid (411, 421, 431) to the membrane electrode assembly.

9. Element according to one of claims 1 to 8, the electrical connection means comprising at least two conductive elements (30, 30', 32, 32', 34, 34', 36, 36') :
- that traverse the support, and in which at least one of the two is connected, by a secondary conductor (31, 31', 33, 35, 35', 37), to one of the first and second electrodes (201, 203);
- and/or that only traverses the support in part and from different faces of the support, and each one of which is connected, by a secondary conductor (31, 31', 33, 33', 35, 35', 37, 37'), either to one or to the other of the first and second electrodes (201, 203).

10. Fuel cell, comprising a stack of elements according to one of claims 1 to 9, the peripheral means of holding the MEA together being assembled two by two, the electrical connection means of neighbouring MEA being connected together and the means for the circulation of fluid forming at least one circuit for the flow of fluid through said stack.

11. Fuel cell according to claim 10, the elements being welded two by two.

12. Fuel cell according to claim 10 or 11, the electrical connection means being assembled so as to form a circuit with connection in series or a circuit with connection in parallel or a circuit with connection partially in series and partially in parallel.

13. Fuel cell according to one of claims 10 to 12, the stack of elements being between an input face (61) and an output face (62), the input face comprising gas introduction means (64,64'), for example comprising at least two flow rate regulators, and one of the two input and output faces comprising electrical connection means (68).

14. Fuel cells according to claim 13, further comprising means (74) forming a return electrical circuit, between the face that comprises the electrical connection means (68) and the element (25) of the stack that is the furthest from said face.

15. Method of making a fuel cell element, comprising:
a) a step of moulding the periphery of an assembly of a membrane (200), of a first and a second electrode (201, 203), to form means (21, 23, 25, 27) for holding said assembly together, said means for holding together applying a strain (F, F') to the membrane such that, on each side of the maintaining membrane element assembly, it cannot deform beyond a plane (P, P') that lies on the exterior surface (21', 21") of the support and which is substantially parallel to the membrane,
b) a step of forming, in said means for holding together:
b1) electrical connection means (30, 31, 30', 31', 32, 33, 32', 33', 34, 35, 34', 35', 36, 37, 36', 37', 72),
b2) means (40, 42, 44, 46, 40', 42', 44', 46', 400, 400, 400', 420, 420', 440, 440', 460, 460') for the circulation of fluid and for the supply of said fluid to said membrane electrode assembly.
